# FASCICULE DE BREVET EUROPEEN

(11) **EP 2 053 806 B1**
(45) Date de publication et mention de la délivrance du brevet: **29.12.2010**
(21) Numéro de dépôt: 08291000.1
(22) Date de dépôt: 23.10.2008
(51) Int. Cl.: H04L 12/58, G06F 15/16

(54) **Procédé et système de messagerie instantanée pour terminaux mobiles équipé d'un serveur de présence virtuelle configuré pour gérer différentes listes de contacts d'un même utilisateur**
Instant-Messaging-Verfahren und -System für mobile Endgeräte, die mit einem virtuellen Anwesenheitsserver ausgestattet sind, der für die Verwaltung verschiedener Kontaktlisten desselben Benutzers konfiguriert ist
Instant messaging method and system for mobile terminals equipped with a virtual presence server configured to manage various address books for the same user

(30) Priorité: 24.10.2007 FR 0707483; 01.02.2008 US 24156
(43) Date de publication de la demande: 29.04.2009
(73) Titulaire: Miyowa, F-13002 Marseille (FR)
(72) Inventeur: Colon, François, F-13013 Marseille (FR)
(74) Mandataire: Novagraaf Technologies

(56) Documents cités:
- EP-A- 1 587 239
- US-A1- 2006 142 880
- US-A1- 2006 259 632

## Description

### Domaine technique de l'invention.

La présente invention a pour objet un système de messagerie instantanée pour terminaux mobiles équipé d'un serveur de présence virtuelle configuré pour gérer différentes listes de contacts d'un même utilisateur. L'invention a également pour objet un procédé permettant de gérer différentes listes de contacts d'un même utilisateur dans une session de messagerie instantanée.

L'invention concerne le domaine technique des messageries instantanées sur terminaux mobiles et plus particulièrement le domaine du routage des informations dans un système de messagerie instantanée.

### État de la technique.

Lorsqu'un utilisateur souhaite ouvrir une session de messagerie instantanée, une application informatique placée dans son terminal mobile émet une requête de présence à destination du serveur de messagerie. Cette requête de présence contient généralement des données permettant d'identifier l'utilisateur. Une fois que l'utilisateur est identifié par le serveur de messagerie, ce dernier envoi aux autres utilisateurs ayant ouvert une session, une information indiquant la présence dudit utilisateur et son souhait de converser. L'application informatique émet périodiquement vers le serveur de messagerie instantanée les requêtes de présence selon une certaine fréquence.
Lorsque l'utilisateur clôt sa session de messagerie, l'application informatique émet une requête de déconnexion à destination du serveur de messagerie instantanée. Cette requête de déconnexion indique au serveur de messagerie que l'utilisateur souhaite clore sa session et ne souhaite plus converser avec les autres utilisateurs. Le serveur de messagerie informe alors les autres utilisateurs de cet évènement.

Il peut arriver qu'un utilisateur de terminal mobile ne puisse pas, ou ne souhaite pas, maintenir sa session de messagerie instantanée ouverte en permanence. Ce peut être le cas lorsque l'utilisateur est en réunion, au volant de sa voiture, etc. Dans de telles situations et avec les systèmes connus de l'art antérieur, soit l'utilisateur clos sa session, soit il la maintient ouverte mais sans converser.

Dans le cas où l'utilisateur clôt sa session, les autres utilisateurs seront informés de cette clôture et ils arrêteront de converser avec lui. Ceci peut être préjudiciable pour l'utilisateur, car il ne reçoit plus aucune information tant qu'il n'ouvre pas de nouveau une session. Dans le cas où l'utilisateur conserve sa session ouverte, il ne pourra plus converser avec les autres utilisateurs. Pour ces derniers, il peut être déplaisant de ne pas voir son correspondant répondre immédiatement, d'autant plus que la messagerie instantanée est perçue comme un moyen d'être joignable en temps réel. Cet état des choses représente un premier inconvénient figurant dans les systèmes de messagerie de l'art antérieur.

Par exemple dans le document US 2006/259632.

Dans les systèmes de messagerie instantanée classiques, des serveurs de messagerie instantanée sont aptes à délivrer des services de messagerie instantanée à des terminaux connectés aux dits serveurs et dont les utilisateurs ont ouvert une session de messagerie instantanée.

Les serveurs de messagerie instantanée sont notamment configurés pour détecter un utilisateur connecté au service de messagerie instantanée et informer d'autres utilisateurs de sa présence afin qu'ils puissent converser. Ces serveurs de messagerie instantanée sont dotés de fonctionnalités limitées et généralistes. D'autres services plus complexes comme la filtration de messages peuvent être délivrés par les serveurs de messagerie, mais ne sont pas forcément présents dans tous les serveurs de messagerie. Si ces services ne sont pas forcément présents, l'intégration de tels nouveaux services pour une utilisation dans un terminal mobile est longue et coûteuse pour les opérateurs, car un grand nombre de protocoles de gestion et de Softwares/Hardwares initialement prévus doivent être modifiés. Ceci est un second inconvénient qui se retrouve dans les systèmes de messagerie de l'art antérieur.

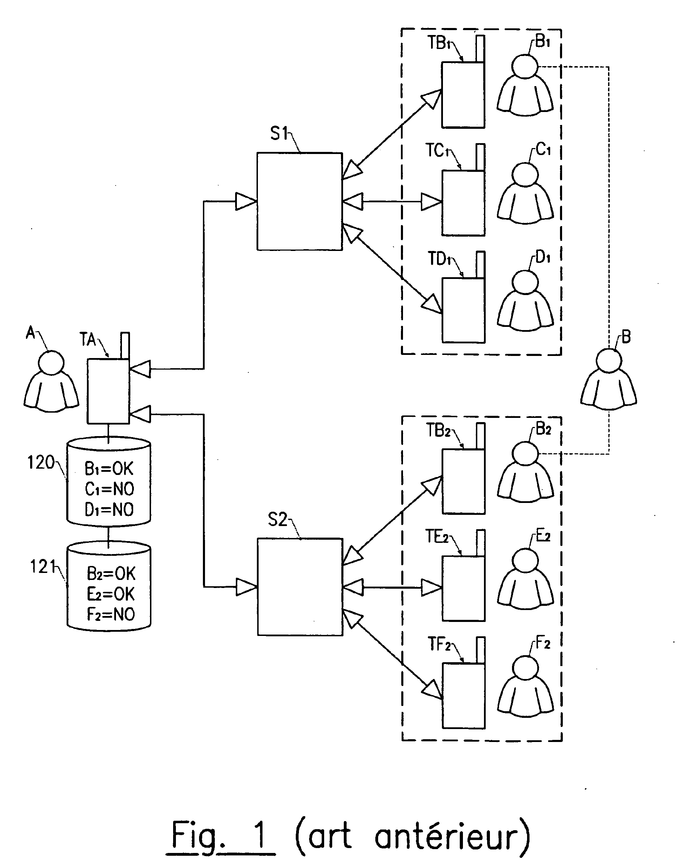

Un système de messagerie instantanée pour terminaux mobiles de l'art antérieur est représenté sur la figure 1. L'utilisateur A possède différentes listes de contacts, par exemple deux en l'occurrence : une première liste répertoriant trois contacts B1, C1, D1 appartenant à une première communauté Co1 de messagerie instantanée, par exemple YAHOO®; une seconde liste répertoriant trois autres contacts B2, E2, F2 appartenant à une seconde communauté Co2, par exemple MSN®. Ces listes de contacts sont généralement envoyées par les serveurs de messagerie instantanée S1, S2, vers le terminal mobile TA de l'utilisateur A. Si l'utilisateur A souhaite converser avec les utilisateurs B1, C1 et D1, il doit se connecter au serveur de messagerie instantanée S1 associé à la première communauté Co1. Si l'utilisateur A souhaite par la suite converser avec les utilisateurs B2, C2 et D2 inscrits sur la seconde communauté Co2, par exemple MSN®, il doit se déconnecter du premier serveur S1 et se connecter au serveur de messagerie instantanée S2 associé à cette seconde communauté. Ce procédé est donc laborieux et séquentiel. De plus, il n'y a pas de liaison entre les différentes listes de contacts. Par exemple, si un utilisateur B est inscrit sur plusieurs listes, il n'est pas possible de le voir une seule fois dans une seule liste.

Pour gérer de manière efficace une conversation par messagerie instantanée, il est plus simple de ne converser qu'avec une partie seulement de ses contacts et filtrer les messages provenant d'utilisateurs avec lesquels on ne souhaite pas converser. En effet, si tous les utilisateurs conversent en même temps, la conversation devient rapidement difficile à suivre, d'autant plus en utilisant un terminal mobile. Pour ce faire, l'utilisateur A peut définir des règles de filtration de manière à bloquer les messages à destination ou émis par les utilisateurs avec lesquels il ne souhaite pas converser.
Dans l'exemple représenté sur la figure 1, concernant la communauté Co1, l'utilisateur A souhaite uniquement converser avec l'utilisateur B1. Concernant la communauté Co2, l'utilisateur A souhaite converser avec les utilisateurs B2 et E2 et pas avec l'utilisateur F2. Pour ce faire, l'utilisateur A envois une requête au serveur S1 destinée à indiquer que :
- seuls les messages provenant des utilisateurs B1, B2 et E2 peuvent lui être communiqué et/ou les messages émis par l'utilisateur A ne doivent être destinés qu'aux utilisateurs B1, B2 et E2 (B1=OK ; B2=OK ; E2=OK) ;
- les messages provenant des utilisateurs C1, D1 et F2 doivent être bloqués et/ou les messages émis par l'utilisateur A ne doivent pas être transmis aux utilisateurs C1, D1 et F2 (C1=NO ; D1=NO ; F2=NO).
Les techniques de filtration sont connues de l'homme du métier. En principe, il s'agit de règles de filtration développées par les opérateurs de messagerie instantanée et intégrées dans leurs serveurs de messagerie instantanée existants. Actuellement, l'intégration de règles de filtration dans des serveurs de messagerie instantanée est longue et coûteuse pour les opérateurs, car un grand nombre de protocoles de gestion et de Softwares/Hardwares doivent être modifiés. Ceci reflète un troisième inconvénient présent dans les systèmes de messagerie de l'art antérieur.
Une autre possibilité envisageable par l'homme du métier, consiste à intégrer les règles de filtration dans le logiciel du terminal mobile qui permet de se connecter aux serveurs de messagerie. Toutefois, ces règles de filtration ne sont connues que par le logiciel du terminal mobile et l'utilisateur ne retrouvera pas ces règles s'il se connecte à partir d'un autre terminal mobile. De plus, cette solution alourdie le logiciel du terminal mobile puisqu'il faut stocker les données. Cela devient un handicap dans le cas de terminaux mobiles ayant peu ou pas de capacités de stockage et de traitement.

En se rapportant à l'exemple de la figure 1, un même utilisateur B peut appartenir à deux communautés différentes Co1 et Co2. Dans ce cas, il possédera deux identités différentes selon qu'il est connecté sur l'une ou l'autre des communautés, par exemple B@Co1.com et B@Co2.com.
Lorsque l'utilisateur B ouvre une session de messagerie instantanée sur la première communauté Co1, il est vu par le terminal mobile de l'utilisateur A comme un premier utilisateur B1 ayant comme identité, par exemple B@Co1.com. de même, lorsque l'utilisateur B ouvre une session de messagerie instantanée sur une seconde communauté Co2, il est vu par le terminal mobile de l'utilisateur A comme un second utilisateur B2 ayant comme identité, par exemple B@Co2.com.
Dans les systèmes de messagerie instantanée de l'art antérieur, dans le cas où l'utilisateur A souhaite établir une règle de filtration pour l'utilisateur B, deux règles identiques doivent être définies : une pour l'utilisateur B1 et une autre pour l'utilisateur B2. De manière regrettable, les dispositifs actuels ne permettent pas à l'utilisateur A de définir une seule règle de filtration concernant utilisateur B et d'appliquer cette seule règle aux utilisateurs B1 et B2. Ceci est encore un autre inconvénient qui apparaît dans les systèmes de messagerie de l'art antérieur.

Face à cet état des choses, le problème technique principal que vise à résoudre l'invention est de simplifier la gestion des listes de contacts dans une session de messagerie instantanée de manière à ce qu'un utilisateur puisse converser aisément avec tous ces contacts.
L'invention a également pour objectif de simplifier la mise en oeuvre des règles de filtration dans un système de messagerie instantanée.
L'invention a encore pour objectif de pouvoir ajouter de nouveaux services de messagerie instantanée dans un système de l'art antérieur, sans avoir à modifier les protocoles de gestion et/ou les Softwares/Hardwares initialement installés dans les serveurs de messagerie existants.
L'invention a en outre pour objectif de permettre à un utilisateur de poursuivre aisément une session de messagerie instantanée quand il ne peut pas, ou ne souhaite pas, maintenir sa session ouverte.
Un autre objectif de l'invention est de simplifier la connexion à diverses communautés de messagerie instantanée.

### Divulgation de l'invention.

La solution proposée par l'invention est un système de messagerie instantanée pour terminaux mobiles, comportant :
- un ou plusieurs serveurs de messagerie instantanée aptes à délivrer des services de messagerie instantanée à des terminaux mobiles connectés aux dits serveurs et dont les utilisateurs ont ouvert une session de messagerie instantanée,
- un serveur de présence virtuelle indépendant des serveurs de messagerie instantanée existants, ledit serveur de présence virtuelle étant connecté à au moins un terminal mobile client et à au moins un des serveurs de messagerie existants de manière à ce que les informations à destination ou émises par ledit terminal mobile client transitent par ledit serveur de présence virtuelle,
- et dans lequel les serveurs de messagerie instantanée sont configurés pour transmettre des listes de contacts à destination du terminal mobile client, lesdites listes étant interceptées par le serveur de présence virtuelle, ce dernier comportant un moyen pour agréger les différentes listes de contacts reçues et ne gérer qu'une unique liste sur laquelle sont inscrites les identités des différents utilisateurs, sans distinction de la communauté d'appartenance desdits utilisateurs.

Pour optimiser la gestion d'un utilisateur ayant plusieurs identités (i.e. inscrits sur plusieurs listes de contacts), le terminal mobile client comporte un moyen pour transmettre au serveur de présence virtuelle une information indiquant que des utilisateurs ayant des identités différentes doivent être traités comme un unique utilisateur, ledit serveur de présence virtuelle étant apte à se connecter au serveur de messagerie instantanée sur lequel le terminal mobile dudit utilisateur est connecté.

De manière avantageuse, le serveur de présence virtuelle comporte des moyens pour gérer automatiquement une session de messagerie instantanée à la place du l'utilisateur du terminal mobile client. Dans ce cas, selon une autre caractéristique avantageuse de l'invention permettant à l'utilisateur du terminal mobile client d'être averti de la présence d'un nouvel utilisateur lorsque le serveur de présence virtuelle gère automatiquement la session, les serveurs de messageries comportent un moyen pour transmettre audit serveur de présence virtuelle une requête de présence lorsqu'un nouvel utilisateur inscrit sur les listes de contacts ouvre une session de messagerie instantanée, le réception de cette requête commandant les moyens de gestion dudit serveur de présence virtuelle de manière à ce que lesdits moyens de gestion émettent un message d'avertissement à destination dudit terminal mobile client lors de la gestion automatique de la session de messagerie.

Selon encore une autre caractéristique avantageuse de l'invention permettant d'introduire des règles de filtration dans un système de messagerie instantanée de l'art antérieur, sans modifier l'architecture initiale des serveurs de présences existants, le serveur de présence virtuelle comporte une base de données contenant des règles de filtration destinées à être appliquées aux messages à destination ou émis par les terminaux des utilisateurs inscrits sur les listes de contacts transmises audit serveur. Pour ce faire, le terminal mobile client est équipé d'une application informatique permettant de transmettre au serveur de présence virtuelle des règles de filtration associées à différents utilisateurs, ledit serveur étant équipé de moyens pour enregistrer ces règles de filtration dans la base de données.
Et préférentiellement, le serveur de présence virtuelle comporte un moyen pour transmettre un message d'avertissement aux utilisateurs dont les messages ont été filtrés et/ou au terminal mobile client lorsqu'un message est filtré.

Dans le but de simplifier la gestion des règles de filtration, le serveur de présence virtuelle est équipé de moyens pour analyser les listes de contacts transmises par le terminal mobile client, et de moyens pour vérifier si pour chacun des utilisateurs inscrits sur lesdites listes, une ou plusieurs règles de filtration sont déjà enregistrées dans la base de données. Egalement, le serveur de présence virtuelle est avantageusement configuré pour appliquer la même règle de filtration aux messages à destination ou émis par les terminaux d'utilisateurs ayant des identités différentes, mais devant être traités comme un unique utilisateur.

La solution proposée par l'invention peut également être mise en oeuvre par une procédé pour gérer automatiquement une session dans un système de messagerie pour terminaux mobiles, dans lequel :
- des terminaux se connectent à au moins un serveur de messagerie instantanée de manière à ce que leurs utilisateurs puissent ouvrir une session de messagerie instantanée,
- au moins un terminal mobile client d'un utilisateur se connecte à un serveur de présence virtuelle indépendant des serveurs de messagerie instantanée existants,
- le serveur de présence virtuelle se connecte à au moins un des serveurs de messagerie instantanée de manière à ce que l'utilisateur du terminal mobile client puisse ouvrir une session de messagerie instantanée et converser avec les autres utilisateurs, les informations à destination ou émises par ledit terminal mobile client transitant par ledit serveur de présence virtuelle,
- des listes de contacts à destination du terminal mobile client sont envoyées par le(s) serveur(s) de messagerie instantanée, lesdites listes étant interceptées par le serveur de présence virtuelle,
- le serveur de présence virtuelle agrège les différentes listes de contacts reçues et ne gère qu'une unique liste sur laquelle sont inscrites les identités des différents utilisateurs, sans distinction de la communauté d'appartenance desdits utilisateurs.

### Présentation des dessins.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 représente schématiquement un système de messagerie instantanée pour terminaux mobiles selon l'art antérieur,
- la figure 2 représente schématiquement un système de messagerie instantanée pour terminaux mobiles selon l'invention.

### Modes de réalisation de l'invention.

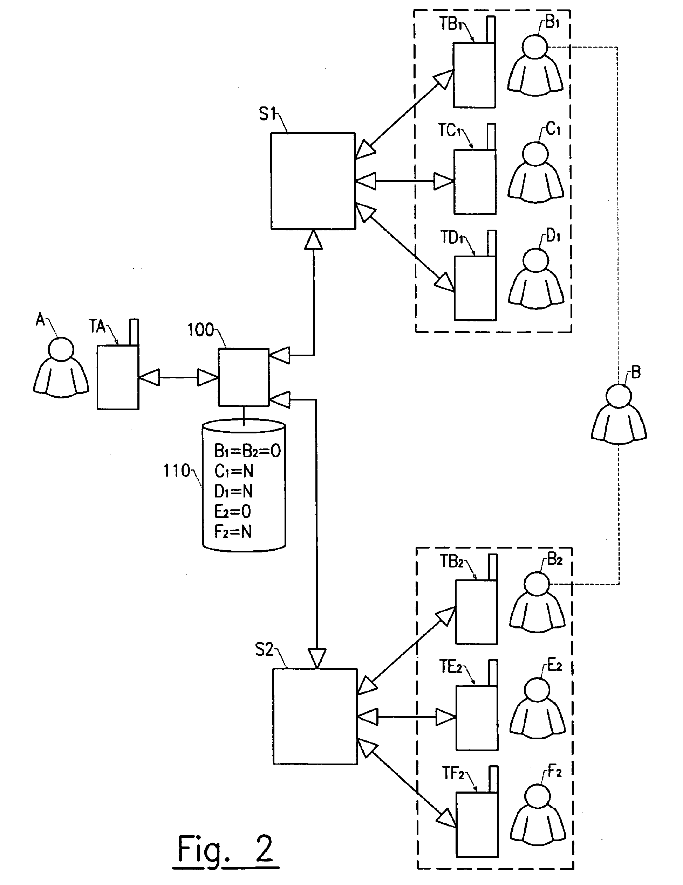

En se rapportant à la figure 2, le système de messagerie instantanée objet de l'invention comporte un ou plusieurs serveurs de messagerie instantanée S1, S2, du type connus de l'homme du métier et capables de délivrer des services de messageries instantanée basiques tels que transmission des messages, gestion des statuts de présence, etc.
Les serveurs S1, S2, sont associés à différentes communautés de messagerie instantanée, respectivement Co1, CO2. Ils sont connectés à un réseau de communication (MSM®, Jabber®, Yahoo !®, ...) habituellement employé pour mettre en oeuvre les services de messagerie instantanée. D'une manière bien connue, ces serveurs de messagerie sont équipés d'un processeur, contrôleur ou de tous autres moyens équivalents permettant de gérer l'état de présence des différents utilisateurs et plus généralement, les différents événements intervenant dans le système.
De la même manière que dans les systèmes de l'art antérieur, les serveurs S1, S2, sont aptes à délivrer des services de messagerie instantanée à des terminaux connectés aux dits serveurs et dont les utilisateurs ont ouvert une session de messagerie instantanée.

Les terminaux mobiles clients TA utilisés pour la mise en oeuvre de l'invention peuvent être des téléphones mobiles, des appareils du type assistant digital personnel (PDA), ou tout autre terminal mobile de communication apte à se connecter à un service de messagerie instantanée. Les terminaux mobiles sont configurés pour être connectés à un réseau de communication du type MSM®, Jabber®, Yahoo !®, etc. Ce type de terminal mobile est utilisé par l'utilisateur A dans la suite de la description.
Les autres terminaux TB1, TC1, TD1, TB2, TE2, TF2, utilisés sont aptes à se connecter au service de messagerie instantanée. Ils peuvent être mobiles du type téléphone mobile, assistant digital personnel (PDA) ou autre, mais également non mobiles tels que ordinateurs. Ce type de terminal est utilisé par les utilisateurs B1, C1, D1, B2, E2, F2 dans la suite de la description.

Les utilisateurs B1, C1, D1, B2, E2, F2, se connectent d'une manière classique aux serveurs de messagerie instantanée S1 et/ou S2 pour ouvrir une session de messagerie instantanée.

Conformément à l'invention, des moyens permettant de mettre en oeuvre des services de messagerie instantanée sont déportés dans un serveur de présence virtuelle 100 indépendant des serveurs de messagerie instantanée S1, S2 existants. En pratique, le serveur de présence virtuelle 100 est un ordinateur ou un programme informatique configuré pour proposer certains services de messagerie instantanée aux terminaux mobiles des clients qui s'y connectent.
Le serveur de présence virtuelle 100 peut notamment être équipé de moyens permettant de gérer automatiquement une session de messagerie instantanée à la place d'un utilisateur, de filtrer des messages et de gérer les listes de contacts d'un utilisateur. Toutefois, d'autres services tels que : prévision météo, publicités, jeux, messagerie audio, ou autres peuvent être mis en oeuvre.
L'utilisation du serveur de présence virtuelle 100 permet donc d'ajouter de nouvelles fonctionnalités dans un système de messagerie instantanée de l'art antérieur, sans avoir à modifier les serveurs de messagerie S1 et S2 existants.

En se rapportant à la figure 2, le serveur de présence virtuelle 100 est connecté à au moins un terminal mobile client TA et à au moins un des serveurs de messagerie existants S1, S2 de manière à ce que les informations à destination ou émises par ledit terminal mobile client transitent par ledit serveur de présence virtuelle durant la session.
En pratique, lorsque l'utilisateur A du terminal mobile client TA souhaite ouvrir une session de messagerie instantanée, une application informatique placée dans ledit terminal émet une requête de présence à destination du serveur de présence virtuelle 100. Cette requête de présence peut contenir l'identification de l'utilisateur et un mot de passe nécessaires pour que le serveur de présence virtuelle 100 autorise la connexion. Il s'agit d'une gestion classique d'autorisation d'accès. De manière avantageuse, la requête de présence contient une information unique permettant d'identifier de façon unique l'utilisateur A. Cet échange d'information est réalisé par l'intermédiaire d'un protocole de communication classique : connexion HTTP, SMS, TCP ou autre. De la même manière que dans les systèmes de l'art antérieur, tant que l'utilisateur A maintient personnellement ouverte sa session de messagerie instantanée, l'application informatique de son terminal mobile client TA continue d'émettre périodiquement des requêtes de présence selon une certaine fréquence ou se met en attente d'informations provenant du serveur de présence virtuelle 100.
Après analyse des informations d'identification de l'utilisateur A, le serveur de présence virtuelle 100 autorise la connexion et alloue un espace mémoire dans lequel il gardera une copie des informations qui vont circuler.

Une fois que la connexion est établie entre le terminal mobile client TA et le serveur de présence virtuelle 100, ce dernier se connecte à au moins un des serveurs de messagerie S1 et/ou S2 de manière à ce que les informations à destination ou émises par ledit terminal mobile client transitent par ledit serveur de présence virtuelle durant la session.
En fonction de la communauté d'appartenance des utilisateurs B1, C1, D1, B2, E2, F2 avec lesquels l'utilisateur A est susceptible de converser, le serveur de présence virtuelle 100 se connectera au serveur de messagerie instantanée S1 lié à une première communauté Co1, ou au serveur de messagerie instantanée S2 lié à une autre communauté Co2. Si l'utilisateur A souhaite converser avec des utilisateurs présents sur plusieurs communautés, le serveur de présence virtuelle se connectera simultanément aux différents serveurs de messagerie S1, S2. Le serveur de présence virtuelle 100 sert donc de passerelle entre le terminal mobile client TA et les serveurs de messagerie instantanée concernée S1 et/ou S2, en laissant transiter les messages et requêtes, et en appliquant si besoin certaines règles d'action.

Pour établir la connexion, le serveur de présence 100 envois une requête de présence aux serveurs de messagerie concernés S1 et/ou S2. Cette requête de présence est similaire à celle émise par l'application informatique du terminal mobile client TA et contient des informations permettant d'identifier l'utilisateur A. Le fait d'émettre une requête de présence similaire à celle émise par le terminal mobile TA permet de ne pas modifier les protocoles d'identification intégrés dans les serveurs de messagerie S1, S2 existants. Dans une variante de réalisation, au lieu d'émettre de nouvelles requêtes de présence, le serveur de présence virtuelle 100 laisse transiter vers les serveurs de messagerie S1 et/ou S2 les requêtes de présence émises périodiquement par l'application informatique placée dans le terminal mobile client TA.

Après analyse des informations d'identification de l'utilisateur A, les serveurs de messagerie S1 et/ou S2 autorisent l'ouverture de la session de messagerie instantanée. Les serveurs de messagerie S1 et/ou S2 informent alors les autres utilisateurs B1, C1, D1, B2, E2, F2 que l'utilisateur A est connecté et prêt à converser. Également, les serveurs de messagerie S1 et/ou S2 peuvent transmettre au serveur de présence virtuelle 100 l'état de présence des autres utilisateurs B1, C1, D1, B2, E2, F2 en session et prêts à converser avec l'utilisateur A. L'utilisateur A peut alors converser avec les utilisateurs B1, C1, D1, B2, E2, F2 ayant ouvert une session.

Le serveur de présence virtuelle 100 est donc perçu par les serveurs de messagerie S1 et/ou S2 comme étant le terminal mobile de l'utilisateur A. On comprend dès lors le sens de l'expression « *présence virtuelle*. » puisque pour les serveurs de messagerie instantanée S1 et/ou S2, le serveur 100 correspond virtuellement au terminal mobile client TA.

A la réception d'une requête émise en ce sens par le serveur de présence virtuelle 100, les serveurs de messagerie instantanée S1 et/ou S2 transmettent audit serveur de présence virtuelle les listes de contacts de l'utilisateur A. Ces dernières sont alors stockées dans une zone mémoire du serveur de présence virtuelle 100.
L'identité des utilisateurs B1, C1, D1, B2, E2, F2 inscrits sur ces listes de contacts est par exemple communiquée au serveur de présence virtuelle 100 par la transmission de leur nom (par exemple « B1 », « C1 », « D1 », « B2 », « E2 », « F2 ») et/ou de leur adresse e-mail (par exemple « B1@Co1.com », « C1@Co1.com », « D1@Co1.com », « B2@Co2.com », « E2@Co2.com », « F2@Co2.com »), etc.

En comparaison du système de messagerie instantanée de l'art antérieur représenté sur la figure 1, le serveur de présence virtuelle 100 comporte un moyen pour agréger les différentes listes de contacts reçues pour ne gérer qu'une unique liste 110 sur laquelle sont inscrites les identités des différents utilisateurs B1, C1, D1, B2, E2, F2, sans distinction de la communauté d'appartenance desdits utilisateurs. En pratique, l'agrégation des listes de contacts se fait par l'intermédiaire d'un programme, sous programme ou autre.

Pour gérer de manière efficace la conversation, il est possible que l'utilisateur A ne souhaite converser qu'avec une partie seulement de ses contacts et filtrer les messages provenant des autres utilisateurs. Pour ce faire, le serveur de présence virtuelle 100 comporte une base de données contenant des règles de filtration destinées à être appliquées aux messages émis par les terminaux des utilisateurs B1, C1, D1, B2, E2, F2 inscrits sur les listes de contacts transmises audit serveur. Ces règles de filtration peuvent être appliquées lors du déroulement normal de la session de messagerie instantanée et/ou lors de la gestion automatique de la session par le serveur de présence virtuelle 100.
De manière avantageuse, le terminal mobile client TA comporte une application informatique permettant de transmettre au serveur de présence virtuelle 100 les règles de filtration que l'utilisateur A souhaite voir associées aux différents utilisateurs B1, C1, D1, B2, E2, F2, ledit serveur étant équipé de moyens pour enregistrer ces règles de filtration dans la base de données.
En se rapportant à l'exemple de la figure 2, l'utilisateur A souhaite uniquement recevoir les messages en provenance des utilisateurs B1, B2 et E2 et souhaite filtrer les messages en provenance de C1, D1 et F2. Pour ce faire, l'application informatique placée dans le terminal mobile client TA transmet une requête au serveur de présence virtuelle 100 destinée à indiquer que les messages provenant des utilisateurs B1, B2 et E2 peuvent lui être communiqués (B1=OK ; B2=OK ; E2=OK ) et que les messages provenant des utilisateurs C1, D1 et F2 doivent être filtrés (C1=NO ; D1=NO ; F2=NO ).
Le terminal mobile client TA peut intégrer une interface spécifique permettant de choisir, pour chacun de ses contacts, une règle de filtration prédéterminée. Il peut s'agir d'une interface graphique sur laquelle est présentée la liste des différents contacts, un menu déroulant étant associé à chacun desdits contacts, ledit menu déroulant présentant les différentes règles de filtration. Il suffit alors à l'utilisateur A de valider une règle de filtration pour chacun de ses contacts. Certaines règles de filtration peuvent être définies par défaut. Par exemple, si l'utilisateur A ne choisit aucune règle de filtration pour un contact, les messages émis par ce dernier sont réputés être autorisés à transiter vers le terminal mobile client TA. Une fois que les règles de filtration sont définies, l'application informatique du terminal mobile client TA transmet au serveur de présence virtuelle 100 ces données.
Les règles de filtration sont préférentiellement des programmes ou commandes de programmes développés par les concepteurs du serveur de présence virtuelle 100 et intégrés dans ledit serveur. Les opérateurs de messagerie instantanée non donc plus à modifier leur serveur de messagerie S1 et/ou S2 pour proposer à l'utilisateur A ce service de filtration.

Le serveur de présence virtuelle 100 est avantageusement équipé de moyens pour analyser les listes de contacts transmises par le terminal mobile client, et vérifier si pour chacun des utilisateurs B1, C1, D1, B2, E2, F2, inscrits sur lesdites listes, une ou plusieurs règles de filtration sont déjà enregistrées dans la base de données. Cette caractéristique permet à l'utilisateur A de ne pas transmettre systématiquement les mêmes règles de filtration au serveur de présence virtuelle 100. Cette analyse peut être réalisée par l'intermédiaire d'une table de correspondance associant aux utilisateurs déjà inscrits sur la liste de contact 110, la dernière règle de filtration à laquelle ils ont été soumis.

Selon une caractéristique avantageuse de l'invention, le serveur de présence virtuelle 100 comporte un moyen pour transmettre un message d'avertissement aux terminaux TC1, TD1, TF2 des utilisateurs C1, D1, F2 dont les messages ont été filtrés. De même, le serveur de présence virtuelle 100 pourra transmettre un message d'avertissement au terminal mobile client TA de l'utilisateur A lorsqu'un message est filtré. Le message d'avertissement peut être du type SMS, MMS, e-mail, ou autre et transite par un réseau de communication connu de l'homme du métier.

En se rapportant à la figure 2, il peut arriver qu'un même utilisateur B appartienne à deux communautés différentes Co1 et Co2. Dans ce cas, il possédera deux identités différentes selon qu'il est connecté sur l'une ou l'autre des communautés, par exemple B@Co1.com et B@Co2.com. Lorsque l'utilisateur B ouvre une session de messagerie instantanée sur la première communauté Co1, il est vu par le serveur de présence virtuelle 100 comme un premier utilisateur B1 ayant comme identité : B@Co1.com. De même, lorsque l'utilisateur B ouvre une session de messagerie instantanée sur une seconde communauté Co2, il est vu par le serveur de présence virtuelle 100 comme un second utilisateur B2 ayant comme identité : B@Co2.com.
Le serveur de présence virtuelle 100 est avantageusement configuré pour reconnaître que les utilisateurs B1 et B2 sont en fait une seule et unique personne. Pour ce faire, l'application informatique placée dans le terminal mobile client TA transmet au serveur de présence virtuelle 100 une information indiquant que les utilisateurs B1 et B2 ayant des identités différentes doivent être traités comme un unique utilisateur B. De cette manière, le serveur de présence virtuelle 100 pourra choisir de se connecter au serveur de messagerie instantanée S1 ou S2 sur lequel le terminal mobile TB1 ou TB2 de l'utilisateur B est connecté. Le serveur de présence virtuelle 100 pourra donc établir cette connexion indépendamment de la communauté d'appartenance de l'utilisateur B, l'essentiel étant que l'utilisateur A puisse converser avec l'utilisateur B.
De même, l'utilisateur A ne pourra définir qu'une seule règle de filtration pour l'utilisateur B, le serveur de présence virtuelle 100 étant configuré pour appliquer cette règle de filtration aux messages à destination ou émis par les terminaux TB1 ou TB2 des utilisateurs B1 ou B2.

Tant que l'utilisateur A du terminal mobile client TA maintient sa session ouverte, le serveur de présence virtuelle 100 laisse transiter les messages vers ledit terminal mobile. Le serveur de présence virtuelle 100 peut également laisser transiter les requêtes de présence émises périodiquement par l'application informatique placée dans le terminal mobile client TA vers les serveurs de messagerie S1 et/ou S2. Egalement, le serveur de présence virtuelles 100 laisse transiter les requêtes de mises à jour ou autres, en provenance des serveurs de messagerie S1 et/ou S2 et à destination du terminal mobile TA.

Conformément à l'invention, dès que l'utilisateur A clos sa session de messagerie instantanée, le serveur de présence virtuelle 100 active des moyens de gestion et gère automatiquement la session de messagerie instantanée à la place dudit utilisateur A. Dans cette configuration, le serveur de présence virtuelle a un rôle essentiellement actif.

Les moyens de gestions sont des processeurs, des contrôleurs ou tous autres softwares/hardwares équivalents permettant de gérer des événements intervenant au niveau du serveur de présence virtuelle 100. En exécutant un ou plusieurs programmes, sous-programmes, microprogrammes ou autres, les moyens de gestions sont aptes à gérer la session de messagerie instantanée à la place de l'utilisateur A. En particulier, les moyens de gestion sont configurés pour recevoir et stockés les messages émis par les autres utilisateurs B1, C1, D1, B2, E2, F2 encore en session et transmettre aux dits utilisateurs d'autres messages en réponse.

Au moment où l'utilisateur A clos sa session de messagerie instantanée, l'application informatique placée dans son terminal mobile client TA transmet une requête en ce sens au serveur de présence virtuelle 100. Dès réception de cette requête, le serveur de présence virtuelle 100 active les moyens de gestion. Cette activation peut également être conditionnée à la réception d'une information indiquant explicitement que l'utilisateur A souhaite que le serveur de présence virtuelle 100 continue de gérer automatiquement sa session. En pratique, cette requête contient un code ou une partie de code apte, à l'exécution, à activer les moyens de gestion.

De manière complémentaire et/ou en variante de réalisation, le serveur de présence virtuelle 100 est avantageusement configuré pour activer les moyens de gestion lorsque la connexion entre le terminal mobile client TA et ledit serveur de présence virtuelle est coupée. Il est en effet possible que l'utilisateur A ferme sa session sans que l'application informatique placée dans son terminal mobile client TA ait le temps de transmettre la requête de clôture. En pratique, lorsque la connexion entre le terminal mobile client TA et le serveur de présence virtuelle 100 est coupée, une application placée dans ledit serveur active les moyens de gestion.

Une fois activés, les moyens de gestion maintiennent la connexion entre le serveur de présence virtuelle 100 et les serveurs de messagerie instantanée S1 et/ou S2. De cette manière, les serveurs S1 et/ou S2 continuent de recevoir et d'envoyer des requêtes sans détecter l'absence de l'utilisateur A et continuent de gérer la session de messagerie instantanée comme si ledit utilisateur A était toujours connecté.

La réception des messages émis par les utilisateurs B1, C1, D1, B2, E2, F2 encore en session, commande les moyens de gestion de manière à ce qu'ils stockent lesdits messages dans une zone mémoire du serveur de présence virtuelle 100. Ainsi, au moment où l'utilisateur A ouvrira de nouveau sa session de messagerie instantanée, il pourra prendre connaissance de tous les messages échangés.

Lors de la gestion automatique de la session, les moyens de gestion peuvent commander l'émission d'un message d'alerte à destination du terminal mobile client TA, lorsqu'un message émis par les terminaux TB1, TC1, TD1, TB2, TE2, TF2 des utilisateurs B1, C1, D1, B2, E2, F2 encore en session et destiné à l'utilisateur A, est reçu par le serveur de présence virtuelle 100. De cette manière, l'utilisateur A peut être averti qu'un de ses contacts cherche à le joindre. Le message d'alerte peut être du type SMS, MMS, e-mail, ou autre et transite par un réseau de communication connu de l'homme du métier.

D'une manière connue de l'homme du métier, les serveurs de messageries S1 et/ou S2 comportent des moyens pour transmettre au serveur de présence virtuelle 100 une requête de présence lorsqu'un nouvel utilisateur inscrit sur les listes de contacts ouvre une session de messagerie instantanée. Dans ce cas, la réception de cette requête de présence active les moyens de gestion du serveur de présence virtuelle 100 de manière à ce que lesdits moyens de gestion émettent un message d'avertissement à destination du terminal mobile client TA. L'utilisateur A peut ainsi être averti qu'un de ses contacts est prêt à communiquer avec lui. Le message d'avertissement peut être du type SMS, MMS, e-mail, ou autre et transite par un réseau de communication connu de l'homme du métier.
De la même façon, lorsque le serveur de présence virtuelle 100 détecte un nouvel évènement (nouveau message, ...) susceptible d'intéresser l'utilisateur A, les moyens de gestion peuvent émettre un message d'avertissement à destination du terminal mobile client TA.

En cas de gestion automatique de la session, il peut également être avantageux d'avertir les autres utilisateurs B1, C1, D1, B2, E2, F2 encore en session, que l'utilisateur A ne peut pas leur répondre dans l'immédiat, mais qu'ils peuvent continuer à converser normalement comme s'il était toujours présent. En effet, les autres utilisateurs B1, C1, D1, B2, E2, F2 pourraient trouver surprenant que l'utilisateur A ne participe pas à la conversation alors qu'il est présumé être encore en session.
Pour ce faire, une fois activés, les moyens de gestion commandent l'émission d'un message d'avertissement à destination des terminaux TB1, TC1, TD1, TB2, TE2, TF2 des autres utilisateurs B1, C1, D1, B2, E2, F2 encore en session. Le message d'avertissement peut être du type SMS, MMS, e-mail, ou autre et transite par les serveurs de messagerie S1 et/ou S2 ou par un autre réseau de communication connu de l'homme du métier.

Le serveur de présence virtuelle 100 conforme à l'invention permet donc d'agréger plusieurs fonctionnalités qu'un serveur de messagerie instantanée S1 et/ou S2 ne pourrait pas supporter, à moins de modifications complexes.

## Revendications

1. Système de messagerie instantanée pour terminaux mobiles, comportant :
- un ou plusieurs serveurs de messagerie instantanée (S1, S2) aptes à délivrer des services de messagerie instantanée à des terminaux mobiles (TA, TB1, TC1, TD1, TB2, TE2, TF2) connectés aux dits serveurs et dont les utilisateurs (A, B1, C1, D1, B2, E2, F2) ont ouvert une session de messagerie instantanée,
- un serveur de présence virtuelle (100) indépendant des serveurs de messagerie instantanée (S1, S2) existants, ledit serveur de présence virtuelle étant connecté à au moins un terminal mobile client (TA) et à au moins un des serveurs de messagerie existants (S1, S2) de manière à ce que les informations à destination ou émises par ledit terminal mobile client transitent par ledit serveur de présence virtuelle,
**se caractérisant par le fait que** les serveurs de messagerie instantanée (S1, S2) sont configurés pour transmettre des listes de contacts à destination du terminal mobile client (TA), lesdites listes étant interceptées par le serveur de présence virtuelle (100), ce dernier comportant un moyen pour agréger les différentes listes de contacts reçues et ne gérer qu'une unique liste (110) sur laquelle sont inscrites les identités des différents utilisateurs (B1, C1, D1, B2, E2, F2), sans distinction de la communauté d'appartenance desdits utilisateurs.

2. Système selon la revendication 1, dans lequel le terminal mobile client (TA) comporte un moyen pour transmettre au serveur de présence virtuelle (100) une information indiquant que des utilisateurs (B1, B2) ayant des identités différentes doivent être traités comme un unique utilisateur (B), ledit serveur de présence virtuelle étant apte à se connecter au serveur de messagerie instantanée (S1, S2) sur lequel le terminal mobile dudit utilisateur (B) est connecté.

3. Système selon l'une des revendications précédentes, dans lequel :
- le serveur de présence virtuelle (100) comporte des moyens pour gérer automatiquement une session de messagerie instantanée à la place dudit utilisateur (A),
- les serveurs de messageries (S1, S2) comportent un moyen pour transmettre audit serveur de présence virtuelle (100) une requête de présence lorsqu'un nouvel utilisateur inscrit sur les listes de contacts ouvre une session de messagerie instantanée,
- la réception de cette requête commandant lesdits moyens de gestion de manière à ce qu'ils émettent un message d'avertissement à destination du terminal mobile client (TA) lors de la gestion automatique de la session de messagerie.

4. Système selon l'une des revendications précédentes, dans lequel le serveur de présence virtuelle (100) comporte une base de données contenant des règles de filtration destinées à être appliquées aux messages émis par les terminaux (TB1, TC1, TD1, TB2, TE2, TF2) des utilisateurs (B1, C1, D1, B2, E2, F2) inscrits sur les listes de contacts.

5. Système selon la revendication 4, dans lequel le serveur de présence virtuelle (100) comporte un moyen pour transmettre un message d'avertissement aux terminaux (TC1, TD1, TF2) des utilisateurs (C1, D1, F2) dont les messages ont été filtrés.

6. Système selon l'une des revendications 4 ou 5, dans lequel le serveur de présence virtuelle (100) comporte un moyen pour transmettre un message d'avertissement au terminal mobile client (TA) lorsqu'un message est filtré.

7. Système selon l'une des revendications 4 à 6, dans lequel le terminal mobile client (TA) comporte une application informatique permettant de transmettre au serveur de présence virtuelle (100) des règles de filtration associées à différents utilisateurs (B1, C1, D1, B2, E2, F2), ledit serveur étant équipé de moyens pour enregistrer ces règles de filtration dans la base de données.

8. Système selon la revendication 7, dans lequel le serveur de présence virtuelle (100) est équipé de moyens pour analyser les listes de contact transmises par le terminal mobile client (TA), et de moyens pour vérifier si pour chacun des utilisateurs (B1, C1, D1, B2, E2, F2) inscrits sur lesdites listes, une ou plusieurs règles de filtration sont déjà enregistrées dans la base de données.

9. Système selon l'une des revendications 4 à 8 prises en combinaison avec la revendication 2, dans lequel le serveur de présence virtuelle (100) est configuré pour appliquer la même règle de filtration aux messages à destination ou émis par les terminaux d'utilisateurs (B1, B2) ayant des identités différentes mais devant être traités comme un unique utilisateur (B).

10. Procédé pour gérer automatiquement une session dans un système de messagerie pour terminaux mobiles, dans lequel:
- des terminaux (TB1, TC1, TD1, TB2, TE2, TF2) se connectent à au moins un serveur de messagerie instantanée (S1, S2) de manière à ce que leurs utilisateurs (B1, C1, D1, B2, E2, F2) puissent ouvrir une session de messagerie instantanée,
- au moins un terminal mobile client (TA) d'un utilisateur (A) se connecte à un serveur de présence virtuelle (100) indépendant des serveurs de messagerie instantanée (S1, S2) existants,
- le serveur de présence virtuelle (100) se connecte à au moins un des serveurs de messagerie instantanée (S1, S2) de manière à ce que l'utilisateur (A) du terminal mobile client (TA) puisse ouvrir une session de messagerie instantanée et converser avec les autres utilisateurs (B1, C1, D1, B2, E2, F2), les informations à destination ou émises par ledit terminal mobile client transitant par ledit serveur de présence virtuelle,
- des listes de contacts à destination du terminal mobile client (TA) sont envoyées par le(s) serveur(s) de messagerie instantanée (S1, S2), lesdites listes étant interceptées par le serveur de présence virtuelle (100),
- le serveur de présence virtuelle (100) agrège les différentes listes de contacts reçues et ne gère qu'une unique liste (110) sur laquelle sont inscrites les identités des différents utilisateurs (B1, C1, D1, B2, E2, F2), sans distinction de la communauté d'appartenance desdits utilisateurs.

11. Procédé selon la revendication 10, dans lequel le terminal mobile client (TA) transmet au serveur de présence virtuelle (100) une information indiquant que des utilisateurs (B1, B2) ayant des identités différentes doivent être traités comme un unique utilisateur (B), ledit serveur de présence virtuelle se connectant au serveur de messagerie instantanée (S1, S2) sur lequel le terminal mobile dudit utilisateur (B) est connecté.

12. Procédé selon l'une des revendications 10 ou 11, dans lequel :
- le serveur de présence virtuelle (100) comporte des moyens pour gérer automatiquement une session de messagerie instantanée à la place de l'utilisateur (A) du terminal mobile client (TA),
- les serveurs de messageries (S1, S2) transmettent au serveur de présence virtuelle (100) une requête de présence lorsqu'un nouvel utilisateur inscrit sur les listes de contacts ouvre une session de messagerie instantanée,
- à la réception de ladite requête et lors de la gestion automatique de la session, les moyens de gestion émettant un message d'avertissement à destination du terminal mobile client (TA).

13. Procédé selon l'une des revendications 10 à 12, dans lequel le serveur de présence virtuelle (100) comporte une base de données contenant des règles de filtration appliquées aux messages émis par les terminaux (TB1, TC1, TD1, TB2, TE2, TF2) des utilisateurs (B1, C1, D1, B2, E2, F2) inscrits sur les listes de contacts.

14. Procédé selon la revendication 13, dans lequel le serveur de présence virtuelle (100) transmet un message d'avertissement aux terminaux (TC1, TD1, TF2) des utilisateurs (C1, D1, F2) dont les messages ont été filtrés.

15. Procédé selon l'une des revendications 13 ou 14, dans lequel le serveur de présence virtuelle (100) transmet un message d'avertissement au terminal mobile client (TA) lorsqu'un message est filtré.

16. Procédé selon l'une des revendications 13 à 15, dans lequel le terminal mobile client (TA) transmet au serveur de présence virtuelle (100) des règles de filtration associées à différents utilisateurs (B1, C1, D1, B2, E2, F2), ledit serveur enregistrant ces règles de filtration dans la base de données.

17. Procédé selon l'une des revendications 13 à 16, dans lequel le serveur de présence virtuelle (100) analyse les listes de contacts transmises par le terminal mobile client, et vérifie si pour chacun des utilisateurs (B1, C1, D1, B2, E2, F2) inscrits sur lesdites listes, une ou plusieurs règles de filtration sont déjà enregistrées dans la base de données.

18. Procédé selon l'une des revendications 13 à 17 prises en combinaison avec la revendication 11, dans lequel le serveur de présence virtuelle (100) applique la même règle de filtration aux messages à destination ou émis par les terminaux d'utilisateurs (B1, B2) ayant des identités différentes mais devant être traités comme un unique utilisateur (B).

## Claims

1. Instant messaging system for mobile terminals comprising:
- one or more instant messaging servers (S1, S2) set up to deliver instant messaging services to mobile terminals (TA, TB1, TC1, TD1, TB2, TE2, TF2) connected to said servers and for which the users (A, B1, C1, D1, B2, E2, F2) have opened an instant messaging session,
- an independent virtual presence server (100) of existing instant messaging servers (S1, S2), said virtual presence server being connected to at least one mobile client terminal (TA) and to at least one of the existing messaging servers (S1, S2) in such a way that the destination information or information emitted by said mobile client terminal passes via said virtual presence server,
**characterised by** the fact that the instant messaging servers (S1 , S2) are configured to transmit contact lists to the destination of the mobile client terminal (TA), said lists being intercepted by the virtual presence server (100), the latter comprising a means for aggregating different contact lists received and for only managing a single list (110), in which the identities of different users (B1, C1, D1, B2, E2, F2) are recorded, without distinguishing the community to which said users belong.

2. System according to claim 1, in which the mobile client terminal (TA) comprises a means for transmitting to the virtual presence server (100) a piece of information indicating that users (B1, B2) with different identities have to be treated like a single user (B), said virtual presence server being able to connect to the instant messaging server (S1, S2) to which the mobile terminal of the said user (B) is connected.

3. System according to any one of the preceding claims in which:
- the virtual presence server (100) comprises means for automatically managing an instant messaging session in the place of said user (A),
- the messaging servers (S1, S2) comprise means for transmitting to said virtual presence server (100) a presence request when a new user registered in the contact lists opens an instant messaging session,
- the receipt of said request controls said management means in that they emit a warning message to the destination of the mobile client terminal (TA) during the automatic management of the messaging session.

4. System according to any one of the preceding claims, in which the virtual presence server (100) comprises a database containing filtration rules intended to be applied to the messages emitted by the terminals (TB1, TC1, TD1, TB2, TE2, TF2) of users (B1, C1, D1, B2, E2, F2) registered in the list of contacts.

5. System according to claim 4, in which the virtual presence server (100) comprises a means for transmitting a warning message to the terminals (TC1, TD1, TF2) of the users (C1, D1, F2) for which the messages have been filtered.

6. System according to any one of claims 4 or 5, in which the virtual presence server (100) comprises a means for transmitting a warning message to the mobile client terminal (TA) when a message is filtered.

7. System according to any one of claims 4 to 6, in which the mobile client terminal (TA) comprises a computer application making it possible to transmit to the virtual presence server (100) the rules of filtration associated with different users (B1, C1, D1, B2, E2, F2), said server being equipped with means for recording these filtration rules in the database.

8. System according to claim 7, in which the virtual presence server (100) is equipped with means for analysing the contact lists transmitted by the mobile client terminal (TA), and means for verifying whether for each of the users (B1, C1, D1, B2, E2, F2) registered on said lists, one or more rules of filtration have already been recorded in the database.

9. System according to any one of claims 4 to 8 in combination with claim 2, in which the virtual presence server (100) is configured to apply the same filtration rule to the destination messages or emitted by the user terminals (B1, B2) with different identifies but which have to be treated as a single user (B).

10. Method for automatically managing a session in a messaging system for mobile terminals in which:
- terminals (TB1, TC1, TD1, TB2, TE2, TF2) are connected to at least one instant messaging server (S1, S2) in such way that their users (B1, C1, D1, B2, E2, F2) can open an instant messaging session,
- at least one mobile client terminal (TA) of a user (A) is connected to an independent virtual presence server (100) of existing instant messaging servers (S1, S2),
- the virtual presence server (100) is connected to at least one of the instant messaging servers (S1, S2) in such a way that the user (A) of the mobile client terminal (TA) can open an instant messaging session and converse with the other users (B1, C1, D1, B2, E2, F2), the destination information or information emitted by said mobile client terminal passing via said virtual presence server,
- destination contact lists of the mobile client terminal (TA) are sent by the instant messaging server(s) (S1, S2), said lists being intercepted by the virtual presence server (100),
- the virtual presence server (100) aggregates the different contact lists received and only manages a single list (110) on which the identities of different users (B1, C1, D1, B2, E2, F2) are registered without distinguishing the community to which said users belong.

11. Method according to claim 10, in which the mobile client terminal (TA) transmits to the virtual presence server (100) information indicating that the users (B1, B2) with different identities have to be treated like a single user (B), said virtual presence server connecting to the instant messaging server (S1, S2) to which the mobile terminal of said user (B) is connected.

12. Method according to any one claims 10 or 11, in which:
- the virtual presence server (100) comprises means for automatically managing an instant messaging session in the place of the user (A) of the mobile client terminal (TA),
- the messaging servers (S1, S2) transmit to the virtual presence sever (100) a presence request when a new user registered in the contact lists opens an instant messaging session,
- on receipt of said request and during the automatic management of the session, the management means emits a warning message to the destination of the mobile client terminal (TA).

13. Method according to any one of claims 10 to 12, in which the virtual presence sever (100) comprises a database containing filtration rules applied to messages emitted by terminals (TB1, TC1, TD1, TB2, TE2, TF2) of users (B1, C1, D1, B2, E2, F2) registered in the contact lists.

14. Method according to claim 13, in which the virtual presence server (100) transmits a warning message to the terminals (TC1, TD1, TF2) of the users (C1, D1, F2) for which the messages have been filtered.

15. Method according to any one of claims 13 or 14, in which the virtual presence server (100) transmits a warning message to the mobile client terminal (TA) when a message has been filtered.

16. Method according to any one of claims 13 to 15, in which the mobile client terminal (TA) transmits to the virtual presence server (100) filtration rules associated with different users (B1, C1, D1, B2, E2, F2), said server recording these filtration rules in the database.

17. Method according to any one of claims 13 to 16, in which the virtual presence server (100) analyses the contact lists transmitted by the mobile client terminal and verifies whether for each of the users (B1, C1, D1, B2, E2, F2) registered in said lists, one or more filtration rules have already been recorded in the database.

18. Method according to any one of claims 13 to 17 in combination with claim 11, in which the virtual presence sever (100) applies the same filtration rule to the destination messages or messages emitted by user terminals (B1, B2) with different identities but having to be treated like a single user (B).

## Patentansprüche

1. Instant-Messaging-System für mobile Endgeräte, enthaltend:
- einen oder mehrere Instant-Messaging-Server (S1, S2), die Instant-Messaging-Dienste für mobile Endgeräte (TA, TB1, TC1, TD1, TB2, TE2, TF2) anbieten können, die mit den Servern verbunden sind und deren Benutzer (A, B1, C1, D1, B2, E2, F2) eine Instant-Messaging-Sitzung geöffnet haben,
- einen Server (100) für virtuelle Präsenz, der von bestehenden Instant-Messaging-Servern (S1, S2) unabhängig ist, wobei der Server für virtuelle Präsenz mit zumindest einem mobilen Client-Endgerät (TA) und mit zumindest einem der bestehenden Messaging-Server (S1, S2) verbunden ist, so dass die Informationen zum bzw. vom mobilen Client-Endgerät den Server für virtuelle Präsenz passieren,
- **dadurch gekennzeichnet, dass** die Instant-Messaging-Server (S1, S2) so konfiguriert sind, dass sie zu dem mobilen Client-Endgerät (TA) Kontaktlisten übertragen, wobei die Listen von dem Server für virtuelle Präsenz (100) abgefangen werden, wobei letzterer ein Mittel aufweist, um die verschiedenen empfangenen Kontaktlisten zusammenzufügen und nur eine einzige Liste (110) zu führen, auf welcher die Identitäten der verschiedenen Benutzer (B1, C1, D1, B2, E2, F2) eingetragen sind, ohne dabei nach der gemeinsamen Zugehörigkeit der Benutzer zu unterscheiden.

2. System nach Anspruch 1, wobei das mobile Client-Endgerät (TA) ein Mittel aufweist, um dem Server für virtuelle Präsenz (100) eine Information zu übertragen, die angibt, dass Benutzer (B1, B2) mit unterschiedlichen Identitäten als ein Einzelbenutzer (B) zu behandeln sind, wobei der Server für virtuelle Präsenz sich mit dem Instant-Messaging-Server (S1, S2) verbinden kann, mit dem das mobile Endgerät des Benutzers (B) verbunden ist.

3. System nach einem der vorangehenden Ansprüche, wobei
- der Server für virtuelle Präsenz (100) Mittel aufweist, um anstelle des Benutzers (A) automatisch eine Instant-Messaging-Sitzung abzuhalten,
- die Messaging-Server (S1, S2) ein Mittel aufweisen, um dem Server für virtuelle Präsenz (100) eine Anwesenheitsanfrage zu übertragen, wenn ein neuer Benutzer, der in den Kontaktlisten eingetragen ist, eine Instant-Messaging-Sitzung öffnet,
- bei Empfang dieser Anfrage die Sitzungsabhaltemittel so angesteuert werden, dass sie dem mobilen Client-Endgerät (TA) beim automatischen Abhalten der Messaging-Sitzung eine Warnmeldung zusenden.

4. System nach einem der vorangehenden Ansprüche, wobei der Server für virtuelle Präsenz (100) eine Datenbank aufweist, die Filterbestimmungen enthält, die dazu bestimmt sind, auf die Nachrichten angewendet zu werden, die von den Endgeräten (TB1, TC1, TD1, TB2, TE2, TF2) der auf den Kontaktlisten eingetragenen Benutzern (B1, C1, D1, B2, E2, F2) ausgesendet werden.

5. System nach Anspruch 4, wobei der Server für virtuelle Präsenz (100) ein Mittel aufweist, um eine Warnmeldung zu den Endgeräten (TC1, TD1, TF2) der Benutzer (C1, D1, F2) zu übertragen, deren Nachrichten ausgefiltert wurden.

6. System nach einem der Ansprüche 4 oder 5, wobei der Server für virtuelle Präsenz (100) ein Mittel aufweist, um eine Warnmeldung zu dem mobilen Client-Endgerät (TA) zu übertragen, wenn eine Nachricht ausgefiltert wird.

7. System nach einem der Ansprüche 4 bis 6, wobei das mobile Client-Endgerät (TA) eine EDV-Anwendung enthält, mit welcher dem Server für virtuelle Präsenz (100) Filterbestimmungen übertragen werden können, die verschiedenen Benutzern (B1, C1, D1, B2, E2, F2) zugeordnet sind, wobei der Server mit Mitteln ausgestattet ist, um diese Filterbestimmungen in die Datenbank aufzunehmen.

8. System nach Anspruch 7, wobei der Server für virtuelle Präsenz (100) mit Mitteln ausgestattet ist, um die von dem mobilen Client-Endgerät (TA) übertragenen Kontaktlisten zu analysieren, sowie Mittel, um zu überprüfen, ob bei einem jeden der auf diesen Listen eingetragenen Benutzern (B1, C1, D1, B2, E2, F2) bereits eine oder mehrere Filterbestimmungen in die Datenbank aufgenommen sind.

9. System nach einem der Ansprüche 4 bis 8 in Kombination mit Anspruch 2, wobei der Server für virtuelle Präsenz (100) so konfiguriert ist, dass die gleiche Filterbestimmung auf die Nachrichten zu bzw. von den Endgeräten von Benutzern (B1, B2) angewendet wird, die verschiedene Identitäten haben, jedoch als ein Einzelbenutzer (B) zu behandeln sind.

10. Verfahren zum automatischen Abhalten von einer Sitzung bei einem Messaging-System für mobile Endgeräte, wobei:
- die Endgeräte (TB1, TC1, TD1, TB2, TE2, TF2) sich mit zumindest einem Instant-Messaging-Server (S1, S2) verbinden, so dass deren Benutzer (B1, C1, D1, B2, E2, F2) eine Instant-Messaging-Sitzung öffnen können,
- zumindest ein mobiles Client-Endgerät (TA) eines Benutzers (A) sich mit einem Server für virtuelle Präsenz (100) verbindet, der von den bestehenden Instant-Messaging-Servern (S1, S2) unabhängig ist,
- der Server für virtuelle Präsenz (100) sich mit zumindest einem der Instant-Messaging-Servern (S1, S2) verbindet, so dass der Benutzer (A) des mobilen Client-Endgeräts (TA) eine Instant-Messaging-Sitzung öffnen und sich mit den weiteren Benutzern (B1, C1, D1, B2, E2, F2) unterhalten kann, wobei die Informationen zu dem oder von dem mobilen Client-Endgerät den Server für virtuelle Präsenz passieren,
- Kontaktlisten von den/dem Instant-Messaging-Server(n) (S1, S2) zum mobilen Client-Endgerät (TA) gesendet werden, wobei die Listen von dem Server für virtuelle Präsenz (100) abgefangen werden,
- der Server für virtuelle Präsenz (100) die verschiedenen empfangenen Kontaktlisten zusammenfügt und nur eine einzige Liste (110) führt, auf welcher die Identitäten der verschiedenen Benutzer (B1, C1, D1, B2, E2, F2) eingetragen sind, ohne dabei nach der gemeinsamen Zugehörigkeit der Benutzer zu unterscheiden.

11. Verfahren nach Anspruch 10, wobei das mobile Client-Endgerät (TA) dem Server für virtuelle Präsenz (100) eine Information überträgt, die angibt, dass Benutzer (B1, B2) mit unterschiedlichen Identitäten als ein Einzelbenutzer (B) zu behandeln sind, wobei der Server für virtuelle Präsenz sich mit dem Instant-Messaging-Server (S1, S2) verbindet, mit dem das mobile Endgerät des Benutzers (B) verbunden ist.

12. Verfahren nach einem der Ansprüche 10 oder 11, wobei
- der Server für virtuelle Präsenz (100) Mittel aufweist, um anstelle des Benutzers (A) des mobilen Client-Endgeräts (TA) automatisch eine Instant-Messaging-Sitzung abzuhalten,
- die Messaging-Server (S1, S2) dem Server für virtuelle Präsenz (100) eine Anwesenheitsanfrage übertragen, wenn ein neuer Benutzer, der in den Kontaktlisten eingetragen ist, eine Instant-Messaging-Sitzung öffnet,
- bei Empfang dieser Abfrage und bei automatischem Abhalten der Sitzung die Sitzungsabhaltemittel dem mobilen Client-Endgerät (TA) eine Warnmeldung zusenden.

13. Verfahren nach einem der Ansprüche 10 bis 12, wobei der Server für virtuelle Präsenz (100) eine Datenbank aufweist, die Filterbestimmungen enthält, die auf die Nachrichten angewendet werden, die von den Endgeräten (TB1, TC1, TD1, TB2, TE2, TF2) der auf den Kontaktlisten eingetragenen Benutzern (B1, C1, D1, B2, E2, F2) ausgesendet werden.

14. Verfahren nach Anspruch 13, wobei der Server für virtuelle Präsenz (100) eine Warnmeldung zu den Endgeräten (TC1, TD1, TF2) der Benutzer (C1, D1, F2) überträgt, deren Nachrichten ausgefiltert wurden.

15. Verfahren nach einem der Ansprüche 13 oder 14, wobei der Server für virtuelle Präsenz (100) zu dem mobilen Client-Endgerät (TA) eine Warnmeldung überträgt, wenn eine Nachricht ausgefiltert wird.

16. Verfahren nach einem der Ansprüche 13 bis 15, wobei das mobile Client-Endgerät (TA) dem Server für virtuelle Präsenz (100) Filterbestimmungen überträgt, die verschiedenen Benutzern (B1, C1, D1, B2, E2, F2) zugeordnet sind, wobei der Server diese Filterbestimmungen in die Datenbank aufnimmt.

17. Verfahren nach einem der Ansprüche 13 bis 16, wobei der Server für virtuelle Präsenz (100) die von dem mobilen Client-Endgerät (TA) übertragenen Kontaktlisten analysiert und überprüft, ob bei einem jeden der auf diesen Listen eingetragenen Benutzern (B1, C1, D1, B2, E2, F2) bereits eine oder mehrere Filterbestimmungen in die Datenbank aufgenommen sind.

18. Verfahren nach einem der Ansprüche 13 bis 17 in Kombination mit Anspruch 11, wobei der Server für virtuelle Präsenz (100) die gleiche Filterbestimmung auf die Nachrichten zu bzw. von den Endgeräten von Benutzern (B1, B2) anwendet, die verschiedene Identitäten haben, jedoch als ein Einzelbenutzer (B) zu behandeln sind.
